# EUROPÄISCHE PATENTANMELDUNG

(11) **EP 3 486 051 A1**
(43) Veröffentlichungstag der Anmeldung: **22.05.2019**
(21) Anmeldenummer: 17202592.6
(22) Anmeldetag: 20.11.2017
(51) Int. Cl.: B27G 11/00, B27G 11/02, B27D 5/00, B29C 63/00

(54) **BESCHLEUNIGTES AUSHÄRTEN VON KLEBSTOFF MITTELS HEIZDRAHT**

(71) Anmelder: Woodtec Fankhauser GmbH, 4803 Vordemwald (CH)
(72) Erfinder: Fankhauser, Thomas, 4803 Vordemwald (CH); Fankhauser, Benjamin, 2043 Boudevilliers (CH)
(74) Vertreter: P&TS SA (AG, Ltd.)

(57) **Zusammenfassung**

Verfahren zum Verkleben einer ersten Klebefläche eines ersten Bauteils (1) mit einer zweiten Klebefläche eines zweiten Bauteils (2), wobei das erste Bauteil (1) aus Holz oder einem anderen faserhaltigen Baustoff hergestellt ist, wobei das zweite Bauteil (2) aus Holz oder einem anderen faserhaltigen Baustoff hergestellt ist, wobei das Verfahren aufweist:
Anbringen eines Heizdrahts (4) auf oder in der Nähe der ersten oder zweiten Klebefläche;
Auftragen eines Klebstoffs (5) auf die erste oder zweite Klebefläche, wobei der Klebstoff ausgebildet ist, durch Wärmeerzeugung schneller auszuhärten;
Anordnen des ersten Bauteils und des zweiten Bauteils in der zu gewünschten Anordnung so, dass die erste Klebefläche gegenüber der zweiten Klebefläche angeordnet ist;
Anlegen eines Heizstroms an den Heizdraht zum beschleunigten Aushärten des Klebstoffs

## Beschreibung

### Technisches Gebiet

Die Erfindung bezieht sich auf eine Klebeverbindung zwischen Holz- oder anderen faserhaltigen Bauteilen.

### Stand der Technik

Der Baustoff Holz hat gegenüber anderen Baustoffen viele Vorteile. Insbesondere ist Holz langlebig und zeigt eine gute Statik. Problematisch ist im heutigen Holzbau allerdings in kurzer Zeit eine stabile und langlebige Verbindung zwischen zwei Holzbauteilen zu schaffen. Dies wird häufig durch die Verwendung von mechanischen Verbindungsmitteln wie Schrauben, Nägeln, Halterungen etc. gelöst, die oft aus Metall bestehen. Dies hat eine Reihe von Nachteilen, weshalb alternativ Klebstoffverbindungen verwendet werden. Klebstoffverbindungen können bei hoher Qualität eine Verbindung erzielen, die stabiler als das Holzelement selbst ist und die ebenso langlebig wie Holz ist. Ein wichtiger Faktor für eine qualitativ hochwertige Klebstoffverbindung ist, dass diese gut aushärtet, bevor das zusammengeklebte Bauteil bewegt wird. Die langen Aushärtezeiten vieler Klebstoffe sind in immer schneller ablaufenden Produktions- und Bauprozessen problematisch.

Im Holzelementbau werden zum Beispiel grosse Hohlkästen industriell vorgefertigt und dann an die Baustelle geliefert. Diese Hohlkästen bestehen aus einer Holzplatte und einer auf die Holzplatte geklebten Holzrahmenstruktur. Der Klebstoff wird zwischen Holzplatte und Holzrahmenstruktur aufgetragen und unter einem definierten Pressdruck ausgehärtet. Die verwendeten Klebstoffe erfordern eine Lagerung der Holzplatten und Holzrahmen und eine Verarbeitung bei 20°C, was eine Herstellung vor Ort oft ausschliesst oder erschwert und für die Arbeiter schweisstreibend ist. Zusätzlich sorgen die langen Aushärtezeiten des Klebstoffs dafür, dass der Herstellungsaufwand erhöht ist oder, bei zwischenzeitlicher Bewegung des noch nicht voll ausgehärteten Teils, die Klebeverbindungsqualität reduziert ist.

Alternativ gibt es deshalb Schmelzkleber, die zur Verflüssigung erhitzt werden und dann bei der Auskühlung wieder verhärten. DE2154037 zeigt zum Beispiel einen metallischen Draht oder ein Metallband, das mit dem Schmelzkleber ummantelt ist. Der Draht oder das Band wird zwischen die zu verklebenden Flächen gelegt. Der Schmelzkleber wird durch Anlegen eines Heizstroms verflüssigt und verklebt diese Flächen durch Aushärten nach dem Ausschalten des Heizstroms. Solche Schmelzkleber existieren mit sehr kurzen Aushärtezeiten. Allerdings haben diese Schmelzkleberverbindungen eine Reihe von Nachteilen. Der zwischen den Klebeflächen angeordnete Metallleiter bewirkt, dass im Bereich des Metallleiters eine Holz-Metall-Holz Verklebung und nicht die gewünschte Holz-Holz-Verklebung geschaffen wird. Der Querschnitt des Metallleiters sorgt oft dafür, dass die beiden Klebeflächen selbst unter Druck nicht genau aneinander liegen, was die Klebeverbindung kompromittieren kann. Die Verflüssigungstemperaturen von Schmelzklebern liegen oft im Bereich der Entflammungstemperatur von Holz, so dass dieses Verfahren im Holzbau zu Bränden führen kann. Holz-Schmelzkleber-Verbindungen genügen nicht für eine statisch belastbare Verklebung, da die Kohäsion des Klebstoffs geringer ist als die Festigkeit des Holzes. Solche Verklebungen dürfen nicht für tragende Holzbauteile eingesetzt werden.

### Darstellung der Erfindung

Es ist Aufgabe der Erfindung, eine verbesserte Klebstoffverbindung von Holzbauteilen zu finden, die eine hochwerte Klebstoffverbindung in einer kurzen Zeit erlaubt.

Erfindungsgemäss wird diese Aufgabe durch einen Klebstoff, der durch Wärmeerzeugung schneller aushärtet, und einen Heizdraht zum beschleunigten Aushärten des Klebstoffs erreicht. Da der Heizdraht in dem ersten oder zweiten zu verklebenden Bauteil integriert ist, kann der Heizdraht die Klebeflächen effektiv an den benötigten Stellen heizen und somit die Aushärtezeit signifikant verkürzen. Da die Wärme zur Aushärtung lokal erzeugt wird, muss die Fertigung nicht mehr zwingend in beheizten Räumen vorgenommen werden und kann, wenn gewünscht, direkt an der Baustelle vorgenommen werden. Dies hat den weiteren Vorteil, dass die Größe der Bauteile nicht mehr durch den Transport beschränkt sind. Ein Heizdraht hat weiterhin den Vorteil, dass dessen Temperatur gut kontrolliert werden kann und somit die Gefahr eine Brands durch Überhitzen des Holzes verhindert werden kann.

Weitere vorteilhafte Ausführungsformen sind in den abhängigen Ansprüchen angegeben.

Die Anordnung des Heizdrahts in der Klebefläche eines der beiden zu verklebenden Bauteile hat den Vorteil, dass der Heizdraht eine Erwärmung direkt an den Klebeflächen bewirkt.

Die Anordnung des Heizdrahts in einer Nut der ersten oder zweiten Klebefläche hat den Vorteil, dass der Querschnitt des Drahts nicht verhindert, dass die zwei Klebeflächen aneinander anliegen. Insbesondere da das Erhitzen des Drahts dessen Durchmesser und Länge verändern kann und somit die Klebeflächen bewegen kann, könnte ein Draht zwischen den zwei Klebeflächen die Klebstoffverbindungsqualität beeinträchtigen.

Das Anlegen eines Pressdrucks während der Aushärtung und/oder während dem Heizen, der die beiden Klebeflächen gegeneinander presst, verbessert die Verbindungsqualität der schnell aushärtenden Klebstoffverbindung.

Die Verbindungstechnologie hat sich als besonders vorteilhaft für chemisch härtende Klebstoffe, die auch als Reaktionsklebstoffe bezeichnet werden, insbesondere für Polykondensationsklebstoffe und Polyadditionsklebstoffe, gezeigt.

Ein in dem Heizdraht gemessenen Widerstand und/oder eine an dem Heizdraht gemessenen Temperatur kann vorteilhafterweise für die Steuerung des Heizstroms verwendet werden.

Die Verbindungstechnik kann besonders vorteilhaft für die Herstellung von Hohlkästen und Platten, insbesondere in großen Dimensionen, verwendet werden.

### Kurze Beschreibung der Figuren

Die Erfindung wird anhand der beigefügten Figuren näher erläutert, wobei zeigen
- **Fig. 1**: einen ersten Schritt zur Verklebung zweier Bauteile;
- **Fig. 2**: einen zweiten Schritt zur Verklebung zweier Bauteile;
- **Fig. 3**: einen dritten Schritt zur Verklebung zweier Bauteile;
- **Fig. 4**: einen vierten Schritt zur Verklebung zweier Bauteile;
- **Fig. 5**: eine Schnitt eines erfindungsgemäss hergestellten Hohlkastens;
- **Fig. 6**: eine dreidimensionale Ansicht einer erfindungsgemäss hergestellten Platte;
- **Fig. 7**: eine Vergrösserung des Elements VII aus Fig. 6;
- **Fig. 8**: einen Schnitt einer Keilzinkenverklebung;
- **Fig. 9**: eine Vergrösserung des Elements VII aus Fig. 6; und
- **Fig. 10**: ein Ausführungsbeispiel einer Heizvorrichtung für das Heizen eines Heizdrahts für eine Klebeverbindung.

### Wege zur Ausführung der Erfindung

Die Erfindung betrifft eine Klebstoffverbindung zwischen einem ersten Bauteil und einem zweiten Bauteil.

Die Bauteile sind aus einem faserhaltigen Baustoff, vorzugsweise einem naturfaserhaltigen Baustoff hergestellt. Der faserhaltige Baustoff basiert vorzugsweise auf Holzfasern. Holzfasern beinhalten dabei auch Zellulosefasern, die zum Beispiel aus Altpapier gewonnen wurden. Ein bevorzugtes Material aus einem holzfaserhaltigem Baustoff ist Holz selbst. Jede Form von Holz kann in dem ersten und/oder zweiten Bauteil Anwendung finden, z.B. Massivholz, Brettschichtholz, Sperrholz. Als Sperrholz können Stab- bzw. Stäbchensperrholz, Funiersperrholz, Furnierschichtholz (LVL), Spanplatten, Grobspanplatten (OSB), Brettsperrholz, Dreischichtplatten oder andere Sperrholzarten Anwendung finden. Brettsperrholz ist für viele statisch tragende Bauteile besonders bevorzugt. Ein weiteres Ausführungsbeispiel eines Materials aus einem faserhaltigem Baustoff ist Fasergips, wie er zum Beispiel in Fasergipsplatten Anwendung findet. Dieser Fasergips basiert in der Regel auf Zellulosefasern, d.h. auf Holzfasern. Das erste und das zweite Bauteil können aus dem gleichen Material oder aus unterschiedlichen Materialien bestehen.

Der für die Klebstoffverbindung verwendete Klebstoff ist ausgebildet, umso schneller (besser) auszuhärten, umso höher die Temperatur ist (zumindest zwischen 0° und 180° C). Vorzugsweise ist der Klebstoff ein chemisch aushärtender Klebstoff. Vorzugsweise ist der Klebstoff ein Polykondensationsklebstoff oder ein Polyadditionsklebstoff. Als Polyadditionsklebstoff wird vorzugsweise ein Polyurethan (PUR) Klebstoff, insbesondere ein zwei Komponenten (2K) PUR Klebstoff, oder ein Epoxidharzklebstoff verwendet.

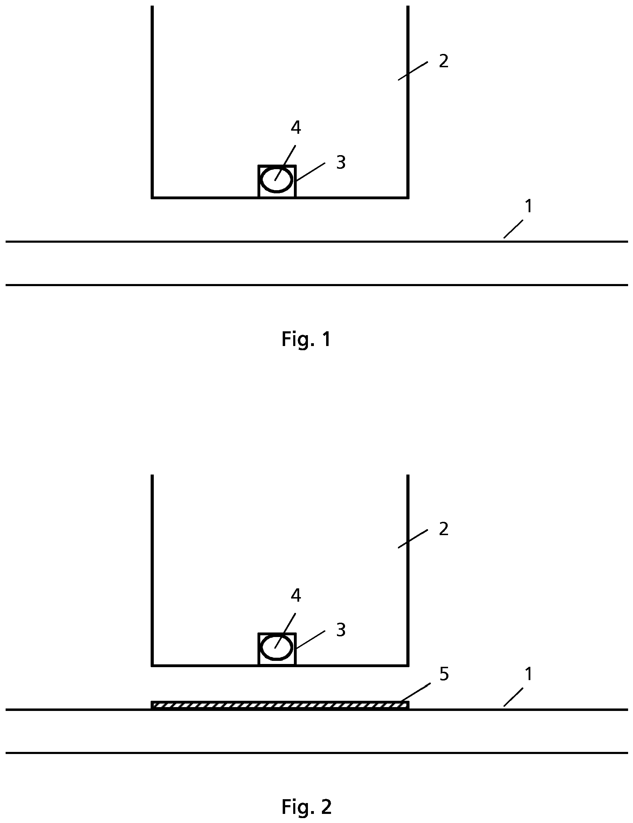

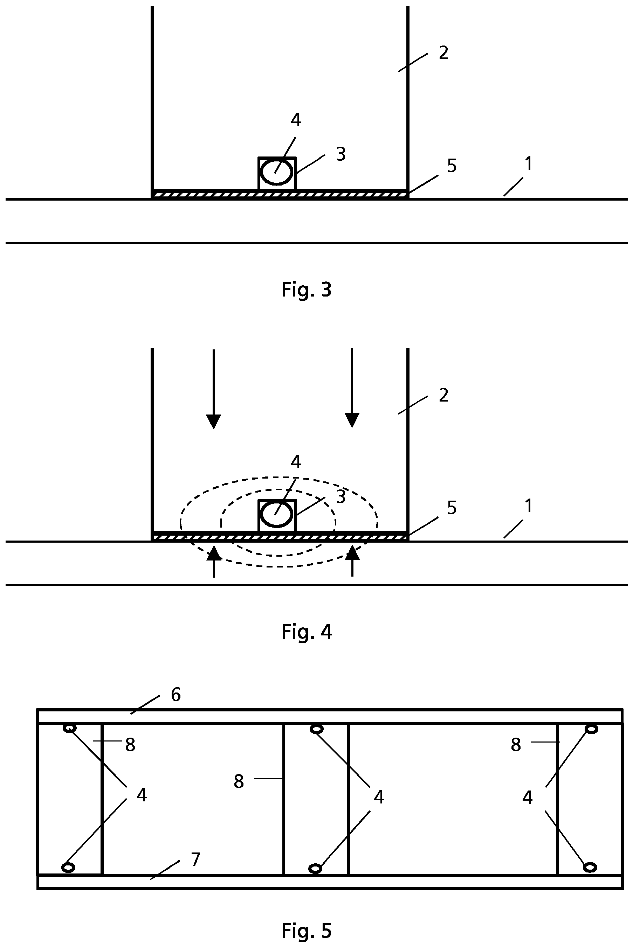

Die Figuren 1 bis 4 zeigen verschiedene Schritte des Verfahrens zum Verkleben von einem ersten Bauteil 1 und einem zweiten Bauteil 2. In dem gezeigten Beispiel ist das erste Bauteil 1 eine Platte, vorzugsweise eine Holzplatte, vorzugsweise eine Brettsperrholzplatte. Allerdings kann das Verfahren auf jedes andere erste Bauteil angewandt werden. In dem gezeigten Ausführungsbeispiel ist das zweite Bauteil 2 ein sich in Längsrichtung erstreckendes Bauteil ähnlich einem Träger oder Balken. Das zweite Bauteil 2 ist vorzugsweise aus Holz, vorzugsweise aus Massivholz oder Brettschichtholz. Das zweite Bauteil 2 ist vorzugsweise Teil einer Rahmenstruktur eines Hohlkastens. Allerdings kann das Verfahren auf jedes andere zweite Bauteil 2 angewandt werden. Durch die Verbindung des ersten Bauteils 1 und des zweiten Bauteils 2 (und evtl. weiterer Bauteile) wird in dem Ausführungsbeispiel ein Hohlkasten wie er in Fig. 5 dargestellt ist, hergestellt. Allerdings kann das Verfahren für die Herstellung aller möglichen Bauteil, insbesondere Holzbauteile, angewandt werden.

Das erste Bauteil 1 weist eine erste Klebefläche, die mit dem zweiten Bauteil 2 verklebt werden soll bzw. wird, auf. Das zweite Bauteil 2 weist eine zweite Klebefläche auf, die mit dem ersten Bauteil 1 bzw. der ersten Klebefläche verklebt werden soll bzw. wird. Vorzugsweise ist die erste Klebefläche und/oder die zweite Klebefläche eine gerade ebene Fläche.

Fig. 1 zeigt einen ersten Schritt, in dem ein Heizdraht 4 in dem ersten oder zweiten Bauteil 1 oder 2 in oder in der Nähe der ersten oder zweiten Klebefläche angeordnet wird.

Der Heizdraht 4 ist elektrisch leitend. Vorzugsweise weist der Heizdraht entlang einer Drahtlängsachse einen konstanten und wohl definierten elektrischen Widerstand auf. Der Heizdraht hat rechtwinkelig zu der Drahtlängsachse einen Drahtquerschnitt. Der Drahtquerschnitt ist vorzugsweise ein Kreis, kann aber auch ellipsenförmig, quadratisch, rechteckig oder anders geformt sein. Der Drahtquerschnitt ist vorzugsweise konstant entlang der Drahtlängsachse. Der Durchmesser des Heizdrahts in Richtung der ersten oder zweiten Klebefläche (das heißt rechtwinkelig zu der Flächennormalen der ersten oder zweiten Klebefläche) ist vorzugsweise kleiner als 1 cm, vorzugsweise als 0,5 cm. In manchen Ausführungsbeispielen ist der Durchmesser des Heizdrahts in Richtung der ersten oder zweiten Klebefläche kleiner gleich 3 mm, vorzugsweise kleiner gleich 1 mm. Heizdraht kann auch als Heizband ausgeführt sein.

Vorzugsweise ist der Heizdraht in der ersten oder zweiten Klebefläche angeordnet. Dies beinhaltet sowohl die Möglichkeit, den Heizdraht einfach auf die entsprechende Klebefläche aufzulegen, als auch die Möglichkeit den Heizdraht in die Klebefläche einzubetten. Die letztere Lösung ist dabei die bevorzugte. Vorzugsweise wird eine Vertiefung in der ersten oder zweiten Klebefläche geschaffen, vorzugsweise durch Ausspanen (Schneiden, Fräsen, Hobeln, etc.) der Vertiefung, in die der Heizdraht eingebettet wird. Vorzugsweise ist die Vertiefung als Nut 3 ausgebildet, in die der Heizdraht eingebettet wird. Vorzugsweise ist die Vertiefung bzw. die Nut 3 tiefer als die Höhe des Heizdrahts 4, so dass der Heizdraht 4 nicht über die Klebefläche, in die die Vertiefung bzw. die Nut 3 gespant ist, übersteht. Vorzugsweise entspricht die Breite der Vertiefung bzw. der Nut 3 ungefähr der Breite des Heizdrahts 4, so dass die Breite der Nut 3 minimal gehalten wird und/oder der Heizdraht 3 sich in der Nut verklemmt. Vorzugsweise ist der Heizdraht 4 in der Nutz 3 befestigt, so dass dieser nicht herausfallen kann. Dies kann durch ein Einklemmen des Heizdrahts 4 in die Nut 3 oder durch Befestigungsmittel wie Klammern erreicht werden. Vorzugsweise ist Heizdraht 4 in der Ebene der ersten oder zweiten Klebefläche und rechtwinkelig zu der Drahtlängsachse in den mittleren 50% der Breite, vorzugsweise in den mittleren 30% der Breite, vorzugsweise in den mittleren 10% der Breite, vorzugsweise in der Mitte der ersten oder zweiten Klebefläche angeordnet. Dadurch wird die Wärme auf beiden Seiten des Heizdrahts 4 gleich verteilt. Es können auch mehrere Heizdrähte 4 in der ersten oder zweiten Klebefläche angeordnet werden. Bei sehr breiten Klebeflächen können zum Beispiel zwei oder mehr Heizdrähte 4 parallel zueinander verlegt werden. Auch wenn eine überkreuzte Anordnung eines oder mehrerer Heizdrähte 4 theoretisch möglich ist, wird davon abgeraten, um nicht einen Hotspot zu erzeugen, der zu einer Entflammung des Holzes an dem Hotspot führen kann. Die Breite der Klebefläche bezieht sich dabei auf die Breite der Klebefläche rechtwinkelig zu der Drahtlängsachse. Alternativ ist es aber auch möglich, den Heizdraht in der Nähe der ersten oder zweiten Klebefläche anzuordnen. In der Nähe bedeutet dabei, dass der Heizdraht so nahe an der Klebefläche angeordnet ist, dass eine Erwärmung des Heizdrahts eine Erwärmung der ersten und/oder zweiten Klebefläche bewirkt. Der Heizdraht könnt zum Beispiel neben der Klebefläche angeordnet werden. Es ist zum Beispiel möglich, den Heizdraht auf gegenüberliegenden Seite der ersten und/oder zweiten Klebefläche neben der Klebefläche anzuordnen und somit eine Heizung der Klebeflächen von zwei Seiten aus zu erreichen.

Fig. 2 zeigt einen zweiten Schritt in dem ein Klebstoff 5 auf die erste und/oder zweite Klebefläche aufgetragen wird. Der Klebstoff 5 wird vorzugsweise gleichmäßig über die erste und/oder zweite Klebefläche verteilt aufgetragen. Dies kann zum Beispiel durch einen Klebstoffauftragevorrichtung geschehen, die über die erste und/oder zweite Klebefläche gefahren wird. Die gleichmäßige Verteilung des Klebstoff 5 kann zum Beispiel in äquidistanten parallelen Linien entlang der Auftragerichtung geschehen. Allerdings ist die Erfindung nicht durch die Auftragetechnik eingeschränkt. Vorzugsweise wird der Klebstoff in flüssiger Form aufgetragen, wobei flüssige Form auch zähflüssige Formen mit aufweist. Es ist allerdings auch möglich, dass der Klebstoff 5 in fester Form, z.B. durch ein Klebeband, aufgetragen wird. Dieses kann danach zum Beispiel durch einen Aktivierungsmechanismus (nicht über die Temperatur) verflüssigt werden. Jede Auftragetechnik des Klebstoffs 5 kann verwendet werden. Der Klebstoff 5 kann auf diejenige der ersten und zweiten Klebefläche aufgetragen, die den Heizdraht 4 enthält, oder auch auf diejenige, die den Heizdraht 4 nicht enthält. Vorzugsweise wird der Klebstoff 5 auf diejenige der ersten und zweiten Klebefläche aufgetragen, deren Flächennormalen entgegen der Erdanziehungsrichtung zeigt. Es ist ebenfalls möglich, den Klebstoff 5 auf beide Klebeflächen aufzutragen. Der erste und der zweite Schritt können in beliebiger Reihenfolge und auch gleichzeitig oder vermischt geschehen. So wäre es zum Beispiel möglich zuerst die Nut 3 in der einer der ersten oder zweiten Klebefläche zu spanen, dann den Klebstoff 5 auf diese eine Klebefläche aufzutragen und danach den Heizdraht 4 in die Nut 3 einzuführen.

Fig. 3 zeigt einen dritten Schritt, in dem das erste Bauteil 1 und das zweite Bauteil 2 in der zu verklebenden Position angeordnet werden. Dabei wird die erste Klebefläche des ersten Bauteils 1 an der zweiten Klebefläche des zweiten Bauteils 2 angeordnet. Die erste Klebefläche entspricht dabei der zweiten Klebefläche, d.h. die erste Klebefläche deckt die komplette zweite Klebefläche ab und umgekehrt. Der dritte Schritt folgt vorzugsweise dem ersten Schritt. Allerdings ist es auch möglich, den ersten Schritt nach dem dritten Schritt durchzuführen, z.B. wenn der Heizdraht 4 neben der ersten oder zweiten Klebefläche angeordnet wird. Vorzugsweise wird der zweite Schritt vor dem dritten Schritt durchgeführt. Allerdings gibt es auch Techniken, wo der Klebstoff 5 in den Spalt zwischen der ersten Klebefläche und der zweiten Klebefläche einfüllt oder eingespritzt wird und somit der zweite Schritt nach dem dritten Schritt durchgeführt wird.

Fig. 4 zeigt den vierten Schritt, in dem der Klebstoff 5 ausgehärtet wird. Während des Aushärtens wird der Heizdraht 4 erwärmt. Der Heizdraht 4 wärmt somit lokal seine nächste Umgebung und damit die erste und die zweite Klebefläche an, so dass der Klebstoff 5 schneller aushärtet. Insbesondere wenn der Heizdraht 4 in einer der Klebeflächen angeordnet ist, so wärmt der Heizdraht 4 die Klebstoffverbindung von Innen heraus und sorgt somit für eine schnelle und stabile Aushärtung.

Der Heizprozess dauert dabei zumindest für einen Teil des Aushärteprozesses, insbesondere für den ersten Teil des Aushärteprozesses. Der Heizprozess könnte zum Beispiel bei Erreichen eines bestimmten Aushärtegrads, der zum Beispiel für bestimmte Belastungen ausreicht, abgeschaltet werden. Vorzugsweise dauert der Heizprozess aber über die ganze Aushärtedauer an. Es ist auch möglich, dass der Heizprozess bereits vorher beginnt und somit die erste oder zweite Klebefläche im zweiten oder dritten Schritt vorwärmt. Es ist ebenfalls möglich, dass bei einer großen Anzahl von Klebeverbindungen mit unterschiedlichen Heizdrähten 4, die Heizdrähte 4 bzw. Gruppen von Heizdrähten 4 nacheinander geheizt werden.

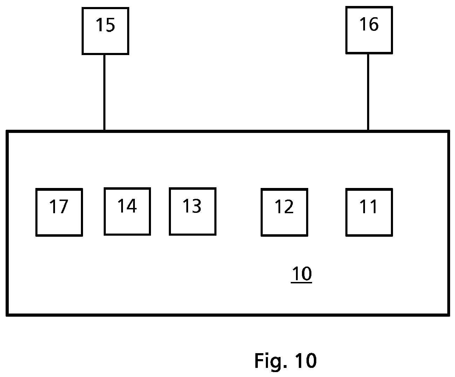

Das Erwärmen des Heizdrahts 4 wird vorzugsweise durch Anlegen eines Heizstroms an dem Heizdraht 4 erzielt. Dazu werden vorzugsweise die Enden des Heizdrahts 4 mit einer Heizvorrichtung 10 verbunden, die über den Heizdraht 4 den Heizstrom fließen lässt. Fig. 10 zeigt ein Ausführungsbeispiel einer solchen Heizvorrichtung 10. Die Heizvorrichtung 10 weist vorzugsweise zwei Anschlüsse 15 und 16 auf, die jeweils mit einem der Enden des Heizdrahts 4 verbunden werden. Zumindest einer, vorzugsweise beide Anschlüsse 15 und 16 sind über ein Kabel mit der Heizvorrichtung 4 verbunden. Das Kabel weist dabei einen kleineren Widerstand als der Heizdraht 4 auf. Der Kabelwiderstand ist dabei so klein gegenüber dem Heizdraht 4, dass der Kabelwiderstand bei einer Widerstandsmessung des zwischen dem ersten Anschluss 15 und dem zweiten Anschluss 16 verbundenen Heizdrahts 4 vernachlässigbar ist. Die Heizvorrichtung 10 weist eine Stromquelle 10 auf. Die Stromquelle 10 kann eine Batterie, z.B. eine 12 V Gleichstrombatterie, oder ein Stromnetzanschluss für z.B. das Standard 220 V oder 110 V Wechselspannungsnetz. Die Stromquelle 10 kann weiterhin einen Stromrichter aufweisen, der die Eingangsspannung aus der Batterie oder dem Netz in eine andere Spannungsart umwandelt. Der Stromrichter könnte zum Beispiel eine Netzspannung in eine Gleichspannung umwandeln. Die Stromquelle 11 könnte dabei sowohl eine Batterie zur mobilen Stromversorgung als auch einen Netzanschluss zum Laden der Batterie und/oder zur stationären Betreibung auf der Basis des Netzstroms. Die Stromquelle 11 weist vorzugsweise einen ersten Ausgang (zum Beispiel positiver Polarität), der mit dem ersten Anschluss 15 verbunden oder verbindbar ist, und einen zweiten Ausgang (zum Beispiel negativer Polarität), der mit dem zweiten Anschluss 16 verbunden oder verbindbar ist. Die Heizvorrichtung 10 weist vorzugsweise eine Stromregelschaltung 12 auf, die zwischen den Ausgängen der Stromquelle 11 und den zwei Anschlüssen 15 und 16 geschaltet ist. Die Stromregelung 12 regelt in Abhängigkeit von Regelparametern, die zwischen dem ersten und zweiten Anschluss 15 und 16 angelegte Spannung und/oder den über den Heizdraht 4 fließenden Strom. Die Stromregelschaltung 12 könnte zum Beispiel eine Pulsweitenmodulation zur Regelung der angelegten Stromstärke. Vorzugsweise weist die Heizvorrichtung 10 eine Widerstandsmessvorrichtung 13 auf, die den Widerstand des zwischen den Anschlüssen 15 und 16 geschalteten Heizdrahts 4 misst. Aufgrund des gemessenen Widerstands kann mit der Stromregelschaltung 12 die richtige Stromstärke eingestellt werden, der zur richtigen Temperatur entlang des Heizdrahts 4 führt. Der Gesamtwiderstand des Heizdrahts 4 erlaubt eine Einstellung des richtigen Heizstroms, um eine gewünschte Heizdrahttemperatur zu erreichen. Alternativ oder zusätzlich, kann die Heizvorrichtung 10 eine Temperaturmessvorrichtung 14 aufweisen. Diese oder zumindest deren Sensoren sind vorzugsweise an einem oder an beiden Anschlüssen 15 und 16 angeordnet, so dass diese die Temperatur des Heizdrahts 4 messen können. Die gemessene Temperatur kann als Regelungsparameter für die Stromregelschaltung verwendet werden, um eine gewünschte Heizdrahttemperatur zu erreichen. Die Temperatur kann auch als zusätzliche Sicherheitsschaltung verwendet werden, wobei die Stromregelschaltung 12 den Heizstrom oberhalb einer Schwellwertstemperatur abschaltet. Die Schwellwertstemperatur ist dabei vorzugsweise kleiner als 160°, vorzugsweise kleiner als 150°, vorzugsweise kleiner als 145°, vorzugsweise kleiner als 142°C, da die Entflammungstemperatur von Holz bei 180°C liegt. Besonders vorteilhaft ist es, als Temperaturmessvorrichtung 14 in den Anschlüssen 15 und 16 einen Temperaturabschaltsensor zu verwenden, der den Heizstrom automatisch bei Erreichen der Schwellwerttemperatur abschaltet. Diese Lösung ist einerseits besonders einfach, da keine komplizierte Regelschaltung mit dezentralen Sensoren und zentraler Regelung notwendig ist. Gleichzeit erlaubt diese Lösung die Heiztemperatur jedes einzelnen Drahts individuell zu überwachen. Vorzugsweise weist die Heizvorrichtung 10 weiterhin eine Ausgabevorrichtung 17 zur Ausgabe der Prüfdaten für die Aushärtung der Klebstoffverbindung. Prüfdaten können zum Beispiel die Länge des Heizvorgangs und/oder die Temperatur während des Heizvorgangs ausgeben. Die Ausgabevorrichtung kann ein Bildschirm oder ein Drucker sein. Die Ausgabevorrichtung könnte auch eine Kommunikationsschnittstelle, z.B. eine WLAN, Bluetooth, USB, etc. Schnittstelle, über die die Prüfdaten an ein weiteres Gerät ausgegeben werden. Das weitere Gerät könnte ein Server oder ein Smartphone sein.

In einem bevorzugten Ausführungsbeispiel wird während des Aushärtens (vierter Schritt) und/oder während der finalen Anordnung des ersten Bauteils 1 zu dem zweiten Bauteil 2 ein Anpressdruck erzeugt, der das erste Bauteil 1 mit der ersten Klebefläche gegen die zweite Klebefläche des zweiten Bauteils presst. Vorzugsweise wird dieser Druck durch eine Presse erreicht. Vorzugsweise wird eine Presse mit einer elastischen Membran verwendet. Dabei wird der Pressdruck durch die elastische Membran auf das erste und/oder zweite Bauteil 1, 2 durch eine Druckregulierung in einer durch die elastische Membran abgeschlossenen Kammer erreicht. In einem Ausführungsbeispiel wird diese Kammer unter einem Druck größer als der Atmosphärendruck gesetzt, so dass die sich aufblähende Kammer gegen das erste und/oder zweite Bauteil drückt und so den Anpressdruck erzeugt. In einem zweiten Ausführungsbeispiel wird das erste und das zweite Bauteil 1, 2 in der durch die elastische Membran abgeschlossenen Kammer gelagert und durch Aussaugen der Luft aus der Kammer ein Unterdruck (oder Vakuum) in der Kammer geschaffen und so der Druck auf das erste und/oder zweite Bauteil erzeugt (Vakuumpresse). Diese Pressen auf der Basis von elastischen Membranen sind erfindungsgemäß besonders vorteilhaft, da der Anpressdruck durch den Druckunterschied auf beiden Seiten der elastische Membran erzielt wird und somit an allen Kontaktstellen der elastischen Membran mit dem zu verklebenden Bauteil konstant ist. In Kombination mit dem durch die Heizung der Klebeverbindung beschleunigten Aushärteprozess werden sehr schnelle und qualitativ hochwertige Klebstoffverbindungen erzielt. Allerdings ist es auch möglich klassische pneumatische oder hydraulische Stempelpressen zu verwenden, um den Anpressdruck zu erreichen. Selbst heute übliche Schraubenpressungen sind denkbar. Für manche Klebstoffverbindungen ist es auch möglich die Aushärtung ohne einen Anpressdruck durchzuführen.

Fig. 5 zeigt einen durch das beschriebene Verfahren hergestellten Hohlkasten, wie er im Elementholzbau immer häufiger Anwendung findet, um zum Beispiel fertige Wände, Decken oder Böden herzustellen. Ein solcher Hohlkasten weist eine erste Platte 6, eine zweite Platte 7 und eine Rahmenstruktur 8 auf. Die erste Platte 6 wird auf eine erste Seite der Rahmenstruktur 8 geklebt. Zur Beschleunigung des Klebevorgangs wird mindestens ein Heizdraht 4 entlang der Klebeflächen der ersten Platte 6 und der Rahmenstruktur 8 verlegt. Durch Erhitzen des mindestens einen Heizdrahts 4 wird der Aushärtevorgang signifikant beschleunigt, so dass die Herstellungszeit für einen solchen Hohlkasten signifikant reduziert werden kann. Die zweite Platte 7 wird auf eine zweite Seite der Rahmenstruktur 8 geklebt. Zur Beschleunigung des Klebevorgangs wird mindestens ein Heizdraht 4 entlang der Klebeflächen der zweiten Platte 7 und der Rahmenstruktur 8 verlegt. Durch Erhitzen des mindestens einen Heizdrahts 4 wird der Aushärtevorgang signifikant beschleunigt, so dass die Herstellungszeit für einen solchen Hohlkasten signifikant reduziert werden kann. Die oben beschriebene Klebevorgang kann entsprechend angewandt werden. Die erste und die zweite Platte 6 und 7 sind vorzugsweise aus Holz, vorzugsweise Brettsperrholz, LVL, OSB oder Dreischichtplatten. Die Rahmenstruktur 8 ist vorzugsweise aus Massivholz oder Brettschichtholz hergestellt. Die Rahmenstruktur 8 wird vorzugsweise aus Trägern oder Balken zusammengesetzt, die sich zumindest entlang der Seiten der ersten und/oder zweiten Platte 6, 7 erstrecken und somit zwischen den beiden Platten 6, 7 und der Rahmenstruktur 8 einen (geschlossenen) Hohlraum ausbilden. Dieser Hohlraum wird je nach Anwendung mit Isolierung, Verkabelung, Rohren, etc. versorgt.

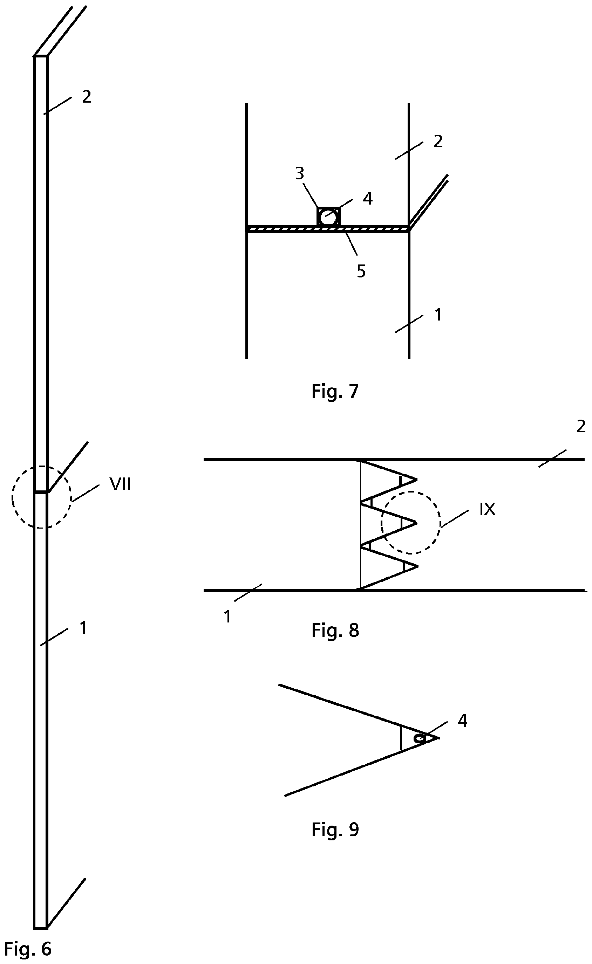

Fig. 6 zeigt eine durch das beschriebene Verfahren hergestellte großflächige Platte. Die großflächige Platte wird aus einer ersten Platte 1 und einer zweiten Platte 2 durch stirnseitige Verklebung hergestellt, so dass die Fläche der großflächigen Platte grösser ist als die der ersten Platte 1 und die der zweiten Platte 2 bzw. so dass die Fläche der großflächigen Platte der Summe der Fläche der ersten Platte 1 und der zweiten Platte 2 entspricht. Die erste und die zweite Platte 1 und 2 haben jeweils zwei flächige Seiten und mindestens eine Seite (Stirnseite), vorzugsweise vier laterale Seiten. Eine Stirnseite der ersten Platte 1 wird als erste Klebefläche mit einer Stirnseite der zweiten Platte als zweite Klebefläche verklebt. An der zu verklebenden Stirnseite der ersten Platte oder der zweiten Platte (entspricht der ersten oder zweiten Klebefläche) wird dazu wie oben beschrieben ein Heizdraht angeordnet, der bei der Aushärtung des Klebstoffs 5 geheizt wird. Dies ist in der in Fig. 7 gezeigten Vergrößerung der Klebeverbindung dargestellt. So können mit kurzen Aushärtezeiten sehr stabile Klebstoffverbindungen zwischen zwei Stirnseiten zweier Platten erreicht werden. Die Klebstoffverbindung, die dabei erreicht wird, ist dabei stabiler als die Bruchkraft der ersten oder zweiten Platte 1 oder 2. Solche großflächigen Platten können als Wände, Decke und Böden im Haus- und Gebäudebau verwendet werden. Die hohe Stabilität der Klebeverbindung ermöglicht eine so hergestellte großflächige Platte direkt zu verputzen ohne die Platten erneut mit Rigipsplatten zu bedecken und deren Fugen zu verspachteln. Bei stirnseitigen Verbindungen aus dem Stand der Technik entstanden immer Risse im Putz entlang der Klebeverbindung am Stoß der beiden Platten 1, 2. Aufgrund der stabilen Klebeverbindung, können solche Risse vermieden werden. Aufgrund des Heizdrahts können solche großflächigen Platten vor Ort schnell hergestellt werden. Die erste und die zweite Platte 1 und 2 sind zum Beispiel Holzplatten, insbesondere LVL, OSB oder Dreischichtplatten. Die erste und die zweite Platte 1 und 2 können aber auch Gipsfaserplatten sein.

Eine weitere Anwendung für die beschriebene Klebetechnik, sind lange tragende Teile, z.B. Balken oder Träger. Diese tragenden Teile waren im Stand der Technik entweder auf die Baumlänge beschränkt oder wurden in Ihrer Tragfähigkeit durch die Verbindung zweier Unterträger reduziert. Mit der beschriebenen Klebeverbindung können zwei Unterträger zu einem Träger mit größerer Länge als die beiden Unterträger zusammengeklebt werden bzw. zu einem Träger einer Länge verklebt werden, die der Summe der beiden Längen der Unterträger entspricht. Für eine solche Verklebung kann zum Beispiel eine Keilzinkenverklebung wie in Fig. 8 verwendet werden. Da die Keilzinkenspitzen entsprechend der Norm abgeschnitten sind, um ein Zinkenspiel in den Zinkentälern zu erlauben, kann ein Heizdraht zwischen den Keilzinkentälern und den abgeschnittenen Keilzinkenspitzen angeordnet werden, um eine Aushärtung des Klebstoffs zu beschleunigen. Dies ist in der in Fig. 9 gezeigten Vergrößerung der Klebeverbindung dargestellt.

Die beschriebenen Anwendungen sind nur Beispiele. Die erfindungsgemässe Klebetechnik kann die im Holzbau problematischen Aushärtezeiten stark reduzieren und kann zahlreichen Gebieten Anwendung finden.

## Patentansprüche

1. Verfahren zum Verkleben einer ersten Klebefläche eines ersten Bauteils (1) mit einer zweiten Klebefläche eines zweiten Bauteil (2), wobei das erste Bauteil (1) aus Holz oder einem anderen faserhaltigen Baustoff hergestellt ist, wobei das zweite Bauteil (2) aus Holz oder einem anderen faserhaltigen Baustoff hergestellt ist, wobei das Verfahren aufweist:
Anbringen eines Heizdrahts (4) in oder in der Nähe der ersten oder zweiten Klebefläche;
Auftragen eines Klebstoffs (5) auf die erste oder zweite Klebefläche, wobei der Klebstoff ausgebildet ist, durch Wärmeerzeugung schneller auszuhärten;
Anordnen des ersten Bauteils (1) und des zweiten Bauteils (2) in der zu gewünschten Anordnung so, dass die erste Klebefläche gegenüber der zweiten Klebefläche angeordnet ist;
Aushärten des Klebstoffs (5), wobei während des Aushärtens der Heizdraht (4) erhitzt wird.

2. Verfahren nach Anspruch 1, wobei der Heizdraht (4) in der ersten oder zweiten Klebefläche angebracht wird.

3. Verfahren nach Anspruch 2, wobei der Heizdraht (4) in einer Nut der ersten oder zweiten Klebefläche angebracht wird.

4. Verfahren nach Anspruch 3, wobei der Heizdraht (4) vollständig versenkt in der Nut angebracht wird, so dass der Heizdraht (4) nicht über die erste oder zweite Klebefläche hervorsteht.

5. Verfahren nach einem der Ansprüche 1 bis 4, wobei die erste Klebefläche und die zweite Klebefläche während der Aushärtung und/oder während dem Erhitzen gegeneinander gepresst werden.

6. Verfahren nach einem der Ansprüche 1 bis 5, wobei der Klebstoff (5) ein wärmehärtender Reaktionsklebstoff, vorzugsweise ein Polykondensations- oder ein Polyadditionsklebstoff, ist.

7. Verfahren nach einem der Ansprüche 1 bis 6, wobei der angelegte Heizstrom von dem in dem Heizdraht (4) gemessenen Widerstand und/oder von der an dem Heizdraht (4) gemessenen Temperatur abhängt.

8. Verfahren nach einem der Ansprüche 1 bis 7, wobei das erste Bauteil (1) eine Platte (6, 7) ist, das zweite Bauteil (2) eine Rahmenstruktur (8) ist, und die mit der Rahmenstruktur (8) verklebte Platte (6, 7) einen Hohlkasten ausbildet.

9. Verfahren nach einem der Ansprüche 1 bis 7, wobei das erste Bauteil (1) eine erste Platte mit einer Stirnseite als die erste Klebefläche ist, das zweite Bauteil (2) eine zweite Platte mit einer Stirnseite als die zweite Klebefläche ist, und die mit der ersten Platte stirnseitig verklebte zweite Platte eine Platte größerer Fläche ausbildet.

10. Bauteil, das ein erstes Bauteil und ein zweites Bauteil aufweist, wobei das erste Bauteil (1) und das zweite Bauteil (2) nach dem Verfahren nach einem der vorigen Ansprüche verklebt wurde.

11. Bauteil aufweisend
ein erstes Bauteil (1) mit einer ersten Klebefläche, wobei das erste Bauteil aus Holz oder einem anderen faserhaltigen Baustoff hergestellt ist;
ein zweites Bauteil (2) mit einer zweiten Klebefläche, wobei das zweite Bauteil aus Holz oder einem anderen faserhaltigen Baustoff hergestellt ist;
eine Klebeverbindung zwischen der ersten Klebefläche und der zweiten Klebefläche mittels eines Klebstoffs (5), der ausgebildet ist, durch Wärmeerzeugung schneller auszuhärten; und
einen Heizdraht (4) in oder in der Nähe der ersten oder zweiten Klebefläche.

12. Heizvorrichtung für die beschleunigte Aushärtung eines Klebstoffs (5) zwischen einer ersten Klebefläche eines ersten Holzbauteils (1) und einer zweiten Klebefläche eines zweiten Holzbauteils (2), aufweisend:
einen ersten Anschluss für die Verbindung mit einem ersten Ende eines zwischen der ersten und zweiten Klebefläche angeordneten Heizdrahts (4);
einen zweiten Anschluss für die Verbindung mit einem zweiten Ende des Heizdrahts (4);
eine Heizstromerzeuger (11, 12) zum Erzeugen eines Heizstroms zwischen dem ersten Anschluss und dem zweiten Anschluss.

13. Heizvorrichtung nach Anspruch 12, wobei der erste und/oder der zweite Anschluss eine Temperaturmessvorrichtung (14) zum Messen der Temperatur des Heizdrahts an dem ersten und/oder zweiten Ende aufweist, wobei die Heizvorrichtung den Heizstrom bei Erreichen oder Überschreiten einer Schwellwerttemperatur, den Heizstrom reduziert oder a usschaltet.

14. Heizvorrichtung nach Anspruch 12 oder 13 aufweisend eine Widerstandsmessvorrichtung (13) zur Messung des Widerstands zwischen dem ersten Anschluss und dem zweiten Anschluss, wobei der Heizstromerzeuger (11, 12) den Heizstrom in Abhängigkeit des gemessenen Widerstands einstellt.

15. Heizvorrichtung nach Anspruch 12 oder 13 aufweisend eine Ausgabevorrichtung (17) zur Ausgabe der Prüfdaten für die Aushärtung der Klebstoffverbindung.

16. Set für die Durchführung des Verfahrens nach einem der Ansprüche 1 bis 11, aufweisend einen Heizdraht (4) und eine Heizvorrichtung (10) nach einem der Ansprüche 12 bis 15.
